# EUROPÄISCHE PATENTANMELDUNG

(11) **EP 4 115 846 A1**
(43) Veröffentlichungstag der Anmeldung: **11.01.2023**
(21) Anmeldenummer: 21183900.6
(22) Anmeldetag: 06.07.2021
(51) Int. Cl.: A61C 8/00

(54) **ZAHNIMPLANTAT**

(71) Anmelder: Steiner, Bernhard, 39040 Tramin (IT); Steiner, Alexander, 39040 Tramin (IT)
(72) Erfinder: Steiner, Bernhard, 39040 Tramin (IT); Steiner, Alexander, 39040 Tramin (IT)
(74) Vertreter: Schwarz & Partner Patentanwälte GmbH

(57) **Zusammenfassung**

Die Erfindung betrifft ein Zahnimplantatsystem umfassend ein Implantatteil (1) und ein Abutment (2), wobei das Implantatteil (1) an einer äußeren Oberfläche ein Schraubgewinde (1') zur Verankerung in einem Kieferknochen und eine zum koronalen Ende des Implantatteils (1) hin offene Implantatausnehmung (3) zur teilweisen Aufnahme des Abutments (2) umfasst, wobei die Implantatausnehmung (3) ein Implantat-Innenprofil (4') und einen darüber angeordneten Aufnahmeabschnitt (5') umfasst, wobei das Abutment (2) an seinem koronalen Ende einen Kopfabschnitt (6) zur Aufnahme eines Zahnersatzes, an seinem dem koronalen Ende gegenüberliegenden apikalen Ende ein zum Implantat-Innenprofil (4') kongruentes Außenprofil (4), und zwischen Kopfabschnitt (6) und Außenprofil (4) einen zum Aufnahmeabschnitt (5') kongruenten Führungsabschnitt (5) aufweist, wobei das Außenprofil (4) und der Führungsabschnitt (5) in der Implantatausnehmung (3) einklebbar sind, wobei die Implantatausnehmung (3) bis in die untere, apikale Hälfte des Implantatteils (1) reicht, wobei das Implantat-Innenprofil (4') in der unteren Hälfte des Implantatteils (1) angeordnet ist.

## Beschreibung

Die Erfindung betrifft ein Zahnimplantatsystem umfassend ein Implantatteil und ein Abutment, wobei das Implantatteil an seiner äußeren Oberfläche ein Schraubgewinde zur Verankerung in einem Kieferknochen und eine zum koronalen Ende des Implantatteils hin offene Implantatausnehmung zur teilweisen Aufnahme des Abutments umfasst, wobei die Implantatausnehmung ein Implantat-Innenprofil und einen darüber angeordneten Aufnahmeabschnitt umfasst, wobei das Abutment an seinem koronalen Ende einen Kopfabschnitt zur Aufnahme eines sekundären Abutments, an seinem dem koronalen Ende gegenüberliegenden apikalen Ende ein zum Implantat-Innenprofil kongruentes Außenprofil und zwischen Kopfabschnitt und Außenprofil einen zum Aufnahmeabschnitt kongruenten Führungsabschnitt aufweist, wobei das Außenprofil und der Führungsabschnitt in der Implantatausnehmung einklebbar sind.

### HINTERGRUND DER ERFINDUNG

In der Implantologie werden heutzutage verschiedenste Zahnimplantate verwendet, auf welchen beliebige Zahnersätze aufgesetzt werden können und welche die Funktion einer künstlichen Zahnwurzel übernehmen. Hierfür wird das Implantat in den Kieferknochen eingebracht und verbindet sich daraufhin innerhalb weniger Monate mittels Osseointegration mit den umgebenden Knochen. An dem aus dem Kieferknochen herausragendem Abutment kann schlussendlich der eigentliche Zahnersatz fixiert werden.

Dabei wird zwischen einteiligen und mehrteiligen Zahnimplantaten unterschieden. Bei einteiligen Zahnimplantaten bildet das eigentliche Implantat mit dem Abutment eine Einheit und das Zahnimplantat muss offen einheilen. Im Gegensatz dazu kann bei mehrteiligen Zahnimplantaten eine geschlossene Einheilung, bei welcher das Zahnfleisch nach Einbringung des Implantats vernäht wird, durchgeführt werden. Nach der Einheilphase wird das Zahnfleisch erneut geöffnet und das Abutment auf das Implantat aufgesetzt und mit diesem verbunden.

Das Implantat wird dabei meist aus Metall, bevorzugt aus Titan, gefertigt, um eine genügend große Belastbarkeit und Lebensdauer aufzuweisen. Ein wesentlicher ästhetischer Nachteil von Titan ist jedoch, dass dieses durch das Zahnfleisch hindurch sichtbar sein kann. Zudem kann es bei Titan-Implantaten auch zu unerwünschten Nebenwirkungen wie Unverträglichkeiten oder Allergien kommen. Alternativ dazu kann das Implantat aus Keramik, vorzugsweise Zirkonoxid, gefertigt werden. Bei bekannten Keramik-Zahnimplantaten erfolgt die Verbindung zwischen Implantat und Abutment zumeist mittels Schrauben. Dabei und auch beim Eindrehen des Implantats in den Kieferknochen kann es leicht zu Beschädigungen wie Rissen im Zirkonoxid kommen. Daher werden zumeist einteilige Keramikimplantate verwendet, welche jedoch keine flexible Anpassung an den jeweiligen Zahnersatz erlauben. Beispielsweise lässt sich der Winkel, in welchem der Zahnersatz schlussendlich stehen soll, nach dem Einsetzen eines einteiligen Keramikimplantats nur eingeschränkt korrigieren.

Mehrteilige, verschraubte Keramikimplantate sind z.B. aus WO 2018/172265 A1 und EP 2 005 915 B1 bekannt. Wie bereits erwähnt ist ein Nachteil dieser Keramikimplantate, welche mittels einer Schraube verbunden werden, das große Frakturrisiko am Implantat beim Einschrauben.

Ein zweiteiliges Keramikimplantat, welches ohne Verschraubung auskommt, ist aus EP 2 170 212 B1 bekannt. Bei diesem Keramikimplantat wird das Abutment mit dem Implantat verklebt, wobei ein Teil des Abutments in einer Aufnahmeöffnung am Implantat eingesetzt wird. Die Aufnahmeöffnung befindet sich jedoch nur im oberen Drittel des Implantats, weshalb einerseits beim Eindrehen des Implantats in den Kieferknochen und andererseits beim eingesetzten und mit Abutment und Zahnersatz verbundenen Implantat eine sehr schlechte Kraftübertragung auf das gesamte Implantat stattfindet. Im Wesentlichen wirkt die Kraft nur auf die Oberkante des Implantats, welche dadurch stark bruchgefährdet ist.

### KURZE BESCHREIBUNG DER ERFINDUNG

Der Erfindung liegt daher die Aufgabe zugrunde, ein Zahnimplantatsystem bereitzustellen, welches die angeführten Nachteile des Stands der Technik überwindet und eine verbesserte Flexibilität bei der Materialzusammensetzung des Implantats sowie des Abutments erlaubt und trotzdem eine große Stabilität und Lebensdauer aufweist.

Gelöst wird diese Aufgabe durch ein Zahnimplantatsystem umfassend ein Implantatteil und ein Abutment, wobei das Implantatteil an seiner äußeren Oberfläche ein Schraubgewinde zur Verankerung in einem Kieferknochen und eine zum koronalen Ende des Implantatteils hin offene Implantatausnehmung zur teilweisen Aufnahme des Abutments umfasst, wobei die Implantatausnehmung ein Implantat-Innenprofil und einen darüber angeordneten Aufnahmeabschnitt umfasst, wobei das Abutment an seinem koronalen Ende einen Kopfabschnitt zur Aufnahme eines sekundären Abutments, an seinem dem koronalen Ende gegenüberliegenden apikalen Ende ein zum Implantat-Innenprofil kongruentes Außenprofil und zwischen Kopfabschnitt und Außenprofil einen zum Aufnahmeabschnitt kongruenten Führungsabschnitt aufweist, wobei das Außenprofil und der Führungsabschnitt in der Implantatausnehmung einklebbar sind, wobei die Implantatausnehmung bis in die untere, apikale Hälfte des Implantatteils reicht, wobei das Implantat-Innenprofil in der unteren Hälfte des Implantatteils angeordnet ist.

Das erfindungsgemäße Implantatteil und Abutment erlauben in der Herstellung eine beliebige Materialwahl und auch eine Kombination von Metall und Keramik. Besonders bevorzugt bestehen sowohl Implantatteil als auch Abutment aus Keramik. Die weit in die untere, apikale Hälfte des Implantatteils reichende Implantatausnehmung erlaubt eine optimierte Kraftübertragung sowohl beim Eindrehen des Implantatteils in den Kieferknochen, als auch nach dem Einkleben des Abutments und der Anbringung des sekundären Abutments, welches dem eigentlichen Zahnersatze entspricht, am Abutment. Damit ergeben sich große Vorteile in Hinblick auf Stabilität und Lebensdauer im Vergleich zu bekannten Keramikimplantaten. Zudem muss das Abutment nicht im Implantatteil verschraubt werden und es kann gänzlich auf eine Schraube verzichtet werden. Speziell bei Keramikimplantaten entstehen beim Verschrauben sehr leicht Frakturen am Implantatteil und am Abutment, welche erfindungsgemäß komplett vermieden werden.

Das Implantatteil kann außerdem auch einen Gingivaformer aufweisen, welcher beim zusammengesetzten Zahnimplantat unterhalb des Kopfabschnitts angeordnet ist. Ein Gingivaformer erlaubt einen stabilen Zahnfleischring um das Implantat.

In einer weiteren Ausführungsvariante ist das Abutment zweiteilig ausgebildet und umfasst ein Emergenzprofil sowie ein Aufbauteil. Dabei kann das Emergenzprofil in der Implantatausnehmung eingesetzt werden und es umfasst eine zum koronalen Ende des Emergenzprofils hin offene Emergenzprofilausnehmung zur teilweisen Aufnahme des Aufbauteils. Das Aufbauteil weist unterhalb des Kopfabschnitts einen zur Emergenzprofilausnehmung kongruenten Aufbauteil-Verbindungsabschnitt, wobei der Aufbauteil-Verbindungsabschnitt im Emergenzprofilausnehmung eingeklebt werden kann.

Weiters kann das Emergenzprofil am koronalen Ende einen oberen Abschnitt aufweisen, welcher an den Führungsabschnitt anschließt und beim zusammengesetzten Zahnimplantatsystem zwischen Implantatteil und Kopfabschnitt angeordnet ist, wobei der obere Abschnitt vorzugsweise eine zylindrische oder ellipsoide Form aufweist. Dieser obere Abschnitt kann den Gingivaformer bilden, welcher einen stabilen Zahnfleischring um das Implantat erlaubt. Hierfür kann der obere Abschnitt individuell angepasst werden und beispielsweise eine kreiszylindrische oder ellipsoide Form aufweisen.

Das Emergenzprofil ist in jeglicher Form herstellbar und kann auch als Rohling hergestellt werden, um danach individuell angepasst zu werden. Beispielsweise kann das Emergenzprofil auch als ein RAW-Abutment produziert werden. Das Außenprofil des Emergenzprofils ist so im unteren Teil, welcher in die Implantatausnehmung geklebt wird, immer passgenau und der obere Abschnitt kann, je nach Wunsch, individuell geformt und zurechtgefräst werden. Mittels 3D-Daten kann auch eine Modellierung am Computer des oberen Abschnitts des Emergenzprofils ermöglicht werden. Der modellierte obere Abschnitt kann dann mit einem Fräsgerät direkt gefräst werden. Somit kann der obere Abschnitt des Emergenzprofils individuell angepasst werden, sodass eine maximale Ästhetik erzielt wird.

Bei der Einbringung des Zahnimplantatsystems kann das Implantatteil einerseits zuerst ohne das Emergenzprofil in den Knochen eingeschraubt werden und anschließend bei geschlossenem Zahnfleisch einheilen. Nach der Einheilung wird dann das Zahnfleisch oberhalb des Implantatteils wieder aufgeschnitten und das Emergenzprofil in die Implantatausnehmung eingesetzt und verklebt. Andererseits kann das Emergenzprofil auch vorab oder direkt nach dem Einschrauben des Implantatteils in den Kieferknochen mit dem Implantatteil verklebt werden. Dann wird eine offene Einheilung des Implantatteils samt Emergenzprofil durchgeführt, wodurch ein zweites Öffnen der Gingiva nicht erforderlich ist. Außerdem kann das Implantatteil zusammen mit dem Emergenzprofil auch einen gemeinsamen Teil bilden, welcher in einem Stück produziert wird.

Besonders bevorzugt können das Außenprofil und der Führungsabschnitt des Abutments bzw. des Emergenzprofils formschlüssig in der Implantatausnehmung aufgenommen werden. Dieser Formschluss bietet gleichzeitig auch eine Rotationssicherung, sodass sich das eingesetzte Abutment nicht mehr drehen kann und die Ausrichtung bis zum Einkleben beibehält.

In einer weiteren Ausführungsvariante ist der Aufnahmeabschnitt derart ausgeführt, dass er sich vom koronalen Ende des Implantatteils zum Implantat-Innenprofil hin verjüngt und der kongruente Führungsabschnitt ist derart ausgeführt, dass er sich in apikaler Richtung zum Außenprofil hin verjüngt, wobei die Innenkontur des Aufnahmeabschnitts und der Führungsabschnitt vorzugsweise eine konische Form aufweisen. Zudem lässt sich durch die Verjüngung das Abutment bzw. das Emergenzprofil oder das Eindrehwerkzeug einfacher in die Implantatausnehmung einbringen, da sich dadurch eine Führung ergibt. Bevorzugt weist die Innenkontur des Aufnahmeabschnitts am koronalen Ende einen größeren Durchmesser als die Innenkontur des Implantat-Innenprofils und der Führungsabschnitt am koronalen Ende einen größeren Durchmesser als das Außenprofil auf. Besonders bevorzugt entspricht der Durchmesser der Innenkontur des Implantat-Innenprofils im Wesentlichen dem Durchmesser der Innenkontur des Aufnahmeabschnitts am Übergang des Implantat-Innenprofils zum Aufnahmeabschnitt und der Durchmesser des Außenprofils im Wesentlichen dem Durchmesser des Führungsabschnitts am Übergang des Außenprofils zum Führungsabschnitt.

Eine bevorzugte Ausführungsvariante sieht vor, dass das Implantat-Innenprofil als Innenmehrrund, vorzugsweise Innensechsrund, und das komplementäre Außenprofil als Außenmehrrund, vorzugsweise Außensechsrund, ausgebildet sind. Der Innensechsrund hat den Vorteil einer geringen Belastung durch Radialkräfte und eine damit verbundene geringe Abnutzung bzw. Beschädigung. Zudem können mittels Innensechsrund hohe Drehmomente übertragen werden, wodurch das Eindrehen des Implantatteils in den Kieferknochen deutlich vereinfacht wird. Da das Implantat-Innenprofil in der unteren, apikalen Hälfte des Implantatteils angeordnet ist, kann eine sichere und stabile Einbringung durch ein Einbringinstrument ermöglicht werden. Besonders bevorzugt weist der darüber liegende Aufnahmeabschnitt der Implantatausnehmung an jeder Stelle der Innenkontur einen zirkularen Querschnitt auf und ist besonders bevorzugt konisch ausgeführt. Somit weist der Aufnahmeabschnitt keine Kanten auf und ein Einbringinstrument, welches das Eindrehen des Implantatteils in den Kieferknochen ermöglicht, greift daher nur im unteren Bereich des Implantatteils, in welchem sich das Implantat-Innenprofil befindet. Die Oberkante des Implantatteils erfährt daher keine Krafteinwirkung und kann nicht brechen.

Der Kopfabschnitt, auf welchem abschließend der Zahnersatz geklebt wird, kann beispielsweise eine zylindrische Form wie ein sechsseitiges Prisma aufweisen, kann gerade oder geneigt ausgeführt sein oder auch als Halteelement gestaltet sein. Bevorzugt ist der Kopfabschnitt abschleifbar und kann somit, falls nötig, individuell angepasst werden.

In einer weiteren Ausführungsvariante umfasst die Emergenzprofilausnehmung ein Emergenzprofil-Innenprofil und einen darüber angeordneten, Emergenzprofil-Aufnahmeabschnitt umfasst, wobei der Aufbauteil-Verbindungsabschnitt ein zum Emergenzprofil-Innenprofil kongruentes Aufbauteil-Außenprofil und einen zum Emergenzprofil-Aufnahmeabschnitt kongruenten Aufbauteil-Führungsabschnitt aufweist.

Des Weiteren kann das Emergenzprofil-Innenprofil als Innenmehrrund, vorzugsweise Innensechsrund, oder kreisförmiges Rundprofil und das Aufbauteil-Außenprofil als Außenmehrrund, vorzugsweise Außensechsrund, oder kreisförmiges Rundprofil ausgebildet sein. Im Falle eines Innenmehrrunds bzw. Außenmehrrunds ergibt sich wieder eine Verdrehsicherung vor dem Einkleben des Aufbauteils in das Emergenzprofil. Je nach Anzahl der Nocken des Innenmehrrunds bzw. Außenmehrrunds kann das Aufbauteil in unterschiedlichen Richtungen in das Emergenzprofil eingesetzt werden. Dies spielt vor allem bei einem abgewinkelten Kopfabschnitt eine Rolle, bei welchem die Ausrichtung des Aufbauteils die Ausrichtung des am Kopfabschnitt anbringbaren Zahnersatzes bestimmt. Im Falle eines Innensechsrunds bzw. eines Außensechsrunds kann das Aufbauteil jeweils um 60° versetzt in der Emergenzprofilausnehmung eingesetzt werden. Bei einem kreisförmigen Rundprofil lässt sich die Ausrichtung des Aufbauteils stufenlos variieren, da eine Drehbarkeit von 360° möglich ist.

Außerdem können die Innenkontur des Emergenzprofil-Aufnahmeabschnitts und der kongruente Aufbauteil-Führungsabschnitt eine konische Form, eine zylindrische Form oder eine Kombination hiervon aufweisen.

Das Implantatteil und/oder das Abutment können aus Zirkonoxid, vorzugsweise Yttrium stabilisiertem Zirkonoxid, eingefärbtem Zirkonoxid oder Titan gefertigt sein. Durch die erfindungsgemäße Ausgestaltung der Implantatausnehmung und des kongruenten Außenprofils sowie Führungsabschnitts besteht bei der Materialwahl der einzelnen Bestandteile des Zahnimplantatsystems größtmögliche Flexibilität. Zudem wird keine Schraube zur Verbindung des Implantatteils mit dem Abutment benötigt. Besonders bevorzugt ist das gesamte Zahnimplantatsystem keramisch, das heißt aus Zirkonoxid gefertigt. Zusätzlich kann das Zirkonoxid des Implantatteils und des Abutments bzw. des Emergenzprofils und des Aufbauteils eingefärbt werden. Neben dem typischen Weiß des Zirkonoxids wäre somit auch Rosa, was der Farbe der Gingiva entspricht, oder ein trübes Weiß, was der Farbe des Dentins oder Wurzel entspricht, möglich. Dadurch ergeben sich auch ästhetische Vorteile gegenüber dem grauen Titan, welches leicht durch die Gingiva hindurchschimmert.

Des Weiteren kann das Zahnimplantatsystem einen Drainage-Kanal am Abutment umfassen, mit welchem der Kleber beim Einkleben des Abutments in das Implantatteil eingebracht werden kann.

### AUSFÜHRLICHE BESCHREIBUNG DER ERFINDUNG

Weitere Vorteile und Details der Erfindung werden nachfolgend anhand der folgenden Figuren und Figurenbeschreibungen erläutert.

Dabei zeigt:
- Fig. 1a bis 1d: eine Explosionsdarstellung (Fig. 1a bzw. Fig. 1b) und eine schematische Darstellung des zusammengesetzten Zahnimplantats (Fig. 1c bzw. Fig. 1d) einer dreiteiligen Ausführungsform des Zahnimplantatsystems mit zirkularem bzw. ellipsoidem Emergenzprofil.
- Fig. 2a und 2b: einen Aufriss (Fig. 2a) bzw. einen Grundriss (Fig. 2b) des erfindungsgemäßen Implantatteils.
- Fig. 3a und 3b: einen Aufriss (Fig. 3a) und einen Grundriss (Fig. 3b) einer Ausführungsform des Emergenzprofils mit zirkularer Form.
- Fig. 4a bis 4c: einen Aufriss (Fig. 4a), einen Kreuzriss (Fig. 4b) und einen Grundriss (Fig. 4c) einer Ausführungsform des Emergenzprofils mit ellipsoider Form.
- Fig. 5a - 5c: einen Aufriss (Fig. 5a), einen Kreuzriss (Fig. 5b) und einen Grundriss (Fig. 5c) einer Ausführungsform des Aufbauteils mit einem sechskantförmigen Kopfteil.

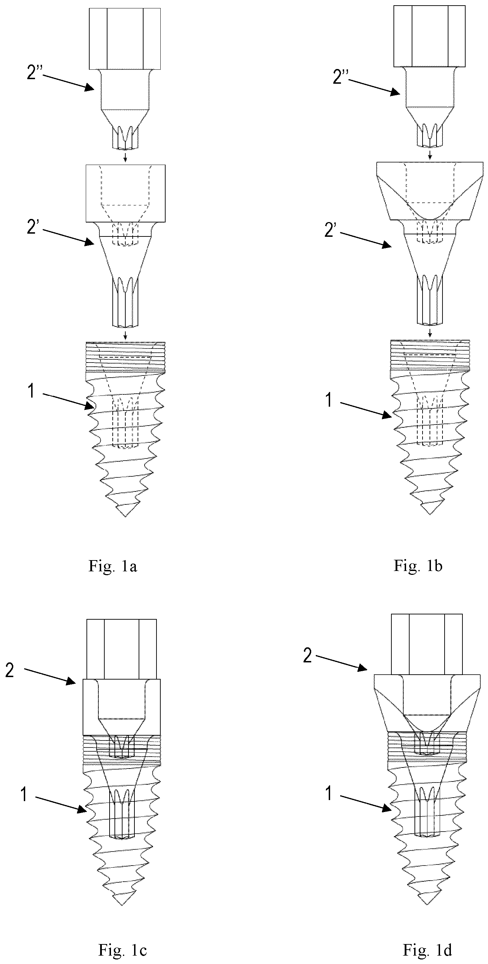

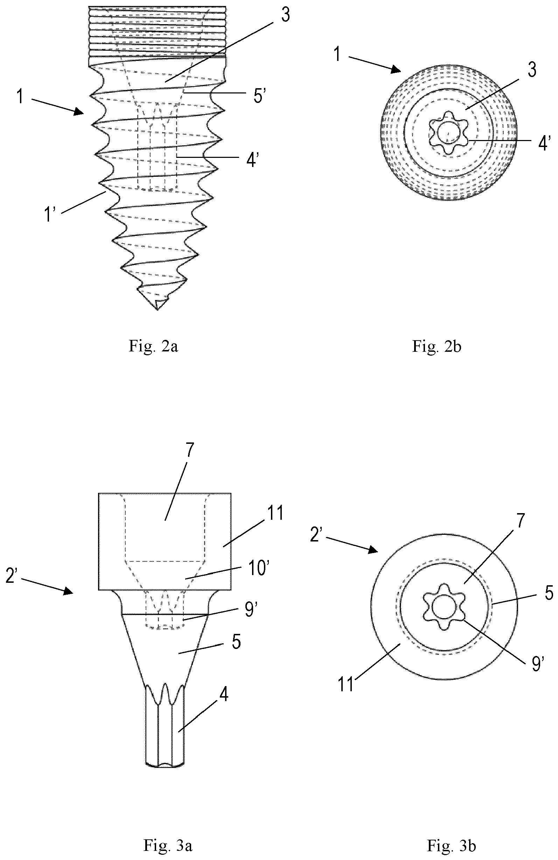

Wie in Fig. 1c - 1d dargestellt umfasst das erfindungsgemäße Zahnimplantatsystem ein Implantatteil 1 und ein Abutment 2. Das Implantatteil 1 weist an einer äußeren Oberfläche ein Schraubgewinde 1' zur Verankerung in einem Kieferknochen und eine zum koronalen Ende des Implantatteils 1 hin offene Implantatausnehmung 3 zur teilweisen Aufnahme des Abutments 2 auf. Die Innenkontur der Implantatausnehmung 3 umfasst wie in Fig. 2a und 2b ersichtlich ein Implantat-Innenprofil 4' und einen darüber angeordneten Aufnahmeabschnitt 5'. Mithilfe des Implantat-Innenprofils 4' kann das Implantatteil 1 auch in den Kieferknochen mittels eines Einbringinstruments eingebracht werden. Erfindungsgemäß reicht die Implantatausnehmung 3 bis in die untere, apikale Hälfte des Implantatteils 1 und das Implantat-Innenprofil 4' ist dabei in der unteren Hälfte des Implantatteils 1 angeordnet. Dadurch kann das Implantatteil 1 sicher und stabil in den Kieferknochen eingebracht werden und die Krafteinwirkung beim Einbringen ist hauptsächlich im apikalen Bereich des Implantatteils 1, wodurch die Frakturanfälligkeit eines keramischen, vorzugsweise aus Zirkonoxid gefertigten, Implantatteils 1 deutlich minimiert wird.

Das Abutment 2 umfasst an seinem koronalen Ende einen Kopfabschnitt 6 zur Aufnahme eines Zahnersatzes und an seinem dem koronalen Ende gegenüberliegenden apikalen Ende ein zum Implantat-Innenprofil 4' kongruentes Außenprofil 4. Zudem befindet sich zwischen dem Kopfabschnitt 6 und dem Außenprofil 4 ein zum Aufnahmeabschnitt 5' kongruenter Führungsabschnitt 5. Das Außenprofil 4 und der Führungsabschnitt 5 können in der Implantatausnehmung 3 eingeklebt werden, wodurch eine fixe Verbindung zwischen Abutment 2 und Implantatteil 1 erreicht wird.

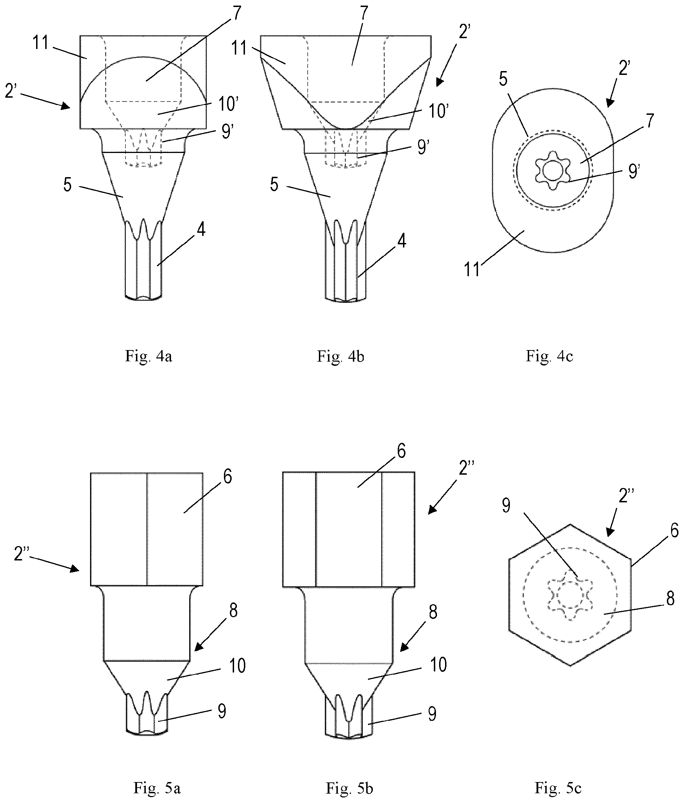

In einer besonders bevorzugten Ausführungsvariante ist das Abutment 2, wie in den Fig. 1a und Fig. 1b dargestellt, zweiteilig ausgebildet und umfasst ein Emergenzprofil 2' sowie ein Aufbauteil 2". Beispielhafte Ausführungsvarianten des Emergenzprofils 2' bzw. des Aufbauteils 2" sind in den Fig. 3a-4c bzw. in den Fig. 5a-5c dargestellt. Wie in Fig. 1c-1d gezeigt wird das Emergenzprofil 2' in die Implantatausnehmung 3 eingebracht und mit dem Implantatteil 1 verbunden, während das Aufbauteil 2" den Kopfabschnitt 6 umfasst und somit das koronale Ende des Abutments 2 bildet. Hierfür weist das Emergenzprofil 2' eine zum koronalen Ende des Emergenzprofils 2' hin offene Emergenzprofilausnehmung 7 zur teilweisen Aufnahme des Aufbauteils 2" auf. Das Emergenzprofil 2' wird wie bereits beschrieben mithilfe des Außenprofils 4 und des Führungsabschnitts 5 kongruent in der Implantatausnehmung 3 eingesetzt und in dieser verklebt. Das Aufbauteil 2" umfasst unterhalb des Kopfabschnitts 6 einen zur Emergenzprofilausnehmung 7 kongruenten Aufbauteil-Verbindungsabschnitt 8, wobei der Aufbauteil-Verbindungsabschnitt 8 im Emergenzprofilausnehmung 7 eingeklebt werden kann.

Beim Einbringen des erfindungsgemäßen Zahnimplantatsystems kann somit in einem ersten Schritt das Implantatteil 1 mithilfe eines Einbringinstruments in den Kieferknochen geschraubt werden. Danach kann das Implantatteil 1 mit einer Einheilkappe verschlossen werden, von der Gingiva überdeckt und zugenäht werden. Dadurch kann das Implantatteil 1 ohne Belastung einheilen. Nach der Einheilung wird die Gingiva wieder geöffnet und die Einheilkappe entfernt. In der Implantatausnehmung 3 kann dann das Abutment 2 eingeklebt werden. Außerdem kann in einem ersten Schritt das Emergenzprofil 2' in die Implantatausnehmung 3 eingeklebt werden. Als Alternative zur geschlossenen Einheilung des Implantatteils 1 samt Einheilkappe kann das Implantatteil 1 auch direkt mit dem Emergenzprofil 2' in Form einer offenen Einheilung eingebracht werden. Die Außenkontur des Emergenzprofils 2' mit Außenprofil 4 und Führungsabschnitt 5 lässt sich kongruent in der Implantatausnehmung 3 einsetzen und dort verkleben. Im letzten Schritt wird in die Emergenzprofilausnehmung 7 der Aufbauteil-Verbindungsabschnitt 8 des Aufbauteils 2" wiederum kongruent eingesetzt und verklebt. Eine offene Einheilung kann auch im Falle der zweiteiligen Ausführungsvariante stattfinden, indem das Implantatteil 1 zusammen mit dem Emergenzprofil 2' einen Teil bildet. In diesem Fall wird nur das Aufbauteil 2" nach der Einbringung des Implantatteils 1 mitsamt dem Emergenzprofil 2' in die Emergenzprofilausnehmung 7 eingeklebt. Der Kopfabschnitt 6 des Aufbauteils 2" steht nach der Einbringung des Aufbauteils 2" in das Emergenzprofil 2' über das koronale Ende des Emergenzprofils 2' hinaus, sodass schlussendlich am Kopfabschnitt 6 der eigentliche Zahnersatz fixiert werden kann.

In einer weiteren Ausführungsvariante weist das Emergenzprofil 2' am koronalen Ende einen oberen Abschnitt 11 auf. Dieser obere Abschnitt 11 ist beim zusammengesetzten Zahnimplantat zwischen Implantatteil 1 und Kopfabschnitt 6 angeordnet. Der obere Abschnitt 11 bildet zudem das koronale Ende der Emergenzprofilausnehmung 7 und ist oberhalb des Führungsabschnitts 5 angeordnet. Der obere Abschnitt 11 des Emergenzprofils 2' kann variabel und individuell angepasst werden, um so an spezielle Gingivaformen angepasst zu werden und die gewünschte dreidimensionale Gewebestruktur zu erreichen. Beispielsweise kann der obere Abschnitt 11 wie in den Fig. 3a und 3b dargestellt eine zylindrische, insbesondere kreiszylindrische Form oder wie in den Fig. 4a - 4c dargestellt eine ellipsoide Form aufweisen. Durch die dreiteilige Ausführungsvariante des Zahnimplantatsystems ergibt sich somit auch der Vorteil, dass einerseits das Emergenzprofil 2' individuell angepasst werden kann und somit eine optimale Gestaltung der Weichgewebemanschette um das Implantat herum erreicht wird und andererseits das Aufbauteil 2" je nach Anordnung des Implantatteils 1 im Mundraum und Ausführung des Emergenzprofils 2'ebenfalls individuell angepasst werden kann, um eine langfristige Funktion und Stabilität des Zahnimplantatsystems sowie den Schutz und Erhalt nicht kompromittierter Nachbarzähne zu garantieren.

Der in Fig. 5a - 5c dargestellte Kopfabschnitt 6 des Aufbautteils 2" weist die Form eines geraden, sechsseitigen Prismas auf. Der Kopfabschnitt 6 kann auch jegliche andere Form aufweisen, wobei er vorzugsweise als gerade oder abgewinkelter Zylinder ausgeführt ist. Außerdem kann der Kopfabschnitt 6 auch als Halteelement ausgeführt sein.

Besonders bevorzugt kann das Außenprofil 4 und der Führungsabschnitt 5 formschlüssig in der Implantatausnehmung 3 aufgenommen werden. Dies wird erreicht, indem das Außenprofil 4 mit dem Implantat-Innenprofil 4' in Eingriff gebracht wird. Durch den Formschluss wird auch eine Rotation des Abutments 2 in Bezug auf das Implantatteil 1 auch vor dem Einkleben verhindert.

Des Weiteren kann sich der Aufnahmeabschnitt 5' wie in Fig. 2a und 2b ersichtlich vom koronalen Ende des Implantatteils 1 zum Implantat-Innenprofil 4' verjüngen. In gleicher Weise verjüngt sich auch der dazu kongruente Führungsabschnitt 5 in apikaler Richtung zum Außenprofil 4, wie in den Fig. 3a, 4a und 4b dargestellt. Bevorzugt weisen die Innenkontur des Aufnahmeabschnitts 5' und der Führungsabschnitt 5 eine konische Form auf. Sie können beispielsweise auch eine Pyramidenform aufweisen.

In einer weiteren bevorzugten Ausführungsvariante ist das Implantat-Innenprofil 4' als Innenmehrrund, vorzugsweise Innensechsrund, und das komplementäre Außenprofil 4 als Außenmehrrund, vorzugsweise Außensechsrund, ausgebildet.

Außerdem kann die Emergenzprofilausnehmung 7 wie in den Fig. 3a - 4c dargestellt ein Emergenzprofil-Innenprofil 9' und einen darüber angeordneten, Emergenzprofil-Aufnahmeabschnitt 10' umfassen. Damit der Aufbauteil-Verbindungsabschnitt 8 kongruent in der Emergenzprofilausnehmung 7 eingesetzt werden kann, muss der Aufbauteil-Verbindungsabschnitt 8 in dieser Ausführungsvariante ein zum Emergenzprofil-Innenprofil 9' kongruentes Aufbauteil-Außenprofil 9 und einen zum Emergenzprofil-Aufnahmeabschnitt 10' kongruenten Aufbauteil-Führungsabschnitt 10 aufweisen. Das Innenprofil des Emergenzprofil-Aufnahmeabschnitts 10' und der Aufbauteil-Führungsabschnitt 10 kann dabei wie in den Fig. 3a, 4a und 4b ersichtlich einen an das Emergenzprofil-Innenprofil 9' bzw. an das Aufbauteil-Außenprofil 9 anschließenden konischen Abschnitt und einen daran anschließenden zylindrischen, vorzugsweise kreiszylindrischen Abschnitt umfassen. Die beiden Abschnitte 10', 10 können aber auch eine durchgehend konische Form oder jegliche andere Form wie z.B. eine Pyramidenform aufweisen.

Des Weiteren kann das Emergenzprofil -Innenprofil 9' als Innenmehrrund, vorzugsweise Innensechsrund, oder kreisförmiges Rundprofil und das Aufbauteil-Außenprofil 9 als Außenmehrrund, vorzugsweise Außensechsrund, oder kreisförmiges Rundprofil ausgebildet sind. Im Falle eines Innensechsrund-Profils bzw. Außensechsrund-Profils kann das Aufbauteil 2" jeweils um 60° verdreht am Emergenzprofil 2' eingesetzt werden, während bei einem Rundprofil eine Drehbarkeit von 360° erlaubt wird.

## Patentansprüche

1. Zahnimplantatsystem umfassend ein Implantatteil (1) und ein Abutment (2), wobei das Implantatteil (1) an einer äußeren Oberfläche ein Schraubgewinde (1') zur Verankerung in einem Kieferknochen und eine zum koronalen Ende des Implantatteils (1) hin offene Implantatausnehmung (3) zur teilweisen Aufnahme des Abutments (2) umfasst,
wobei die Implantatausnehmung (3) ein Implantat-Innenprofil (4') und einen darüber angeordneten Aufnahmeabschnitt (5') umfasst,
wobei das Abutment (2) an seinem koronalen Ende einen Kopfabschnitt (6) zur Aufnahme eines Zahnersatzes, an seinem dem koronalen Ende gegenüberliegenden apikalen Ende ein zum Implantat-Innenprofil (4') kongruentes Außenprofil (4), und zwischen Kopfabschnitt (6) und Außenprofil (4) einen zum Aufnahmeabschnitt (5') kongruenten Führungsabschnitt (5) aufweist,
wobei das Außenprofil (4) und der Führungsabschnitt (5) in der Implantatausnehmung (3) einklebbar sind,
**dadurch gekennzeichnet, dass**
die Implantatausnehmung (3) bis in die untere, apikale Hälfte des Implantatteils (1) reicht, wobei das Implantat-Innenprofil (4') in der unteren Hälfte des Implantatteils (1) angeordnet ist.

2. Zahnimplantatsystem nach Anspruch 1, **dadurch gekennzeichnet, dass** das Abutment (2) zweiteilig ausgebildet ist und ein Emergenzprofil (2') sowie ein Aufbauteil (2") umfasst,
wobei das Emergenzprofil (2') in der Implantatausnehmung (3) einsetzbar ist und eine zum koronalen Ende des Emergenzprofils (2') hin offene Emergenzprofilausnehmung (7) zur teilweisen Aufnahme des Aufbauteils (2") umfasst,
wobei das Aufbauteil (2") unterhalb des Kopfabschnitts (6) einen zur Emergenzprofilausnehmung (7) kongruenten Aufbauteil-Verbindungsabschnitt (8) umfasst,
wobei der Aufbauteil-Verbindungsabschnitt (8) im Emergenzprofilausnehmung (7) einklebbar ist.

3. Zahnimplantatsystem nach Anspruch 2, **dadurch gekennzeichnet, dass** das Emergenzprofil (2') am koronalen Ende einen oberen Abschnitt (11) aufweist, welcher an den Führungsabschnitt (5) anschließt und beim zusammengesetzten Zahnimplantatsystem zwischen Implantatteil (1) und Kopfabschnitt (6) angeordnet ist, wobei der obere Abschnitt vorzugsweise eine zylindrische oder ellipsoide Form aufweist.

4. Zahnimplantatsystem nach einem der Ansprüche 1 bis 3, **dadurch gekennzeichnet, dass** das Außenprofil (4) und der Führungsabschnitt (5) formschlüssig in der Implantatausnehmung (3) aufnehmbar sind.

5. Zahnimplantatsystem nach einem der Ansprüche 1 bis 4, **dadurch gekennzeichnet, dass** der Aufnahmeabschnitt (5') sich vom koronalen Ende des Implantatteils (1) zum Implantat-Innenprofil (4') verjüngt und der Führungsabschnitt (5) sich in apikaler Richtung zum Außenprofil (4) hin verjüngt, wobei die Innenkontur des Aufnahmeabschnitts (5') und der Führungsabschnitt (5) vorzugsweise eine konische Form aufweisen.

6. Zahnimplantatsystem nach einem der Ansprüche 1 bis 5, **dadurch gekennzeichnet, dass** das Implantat-Innenprofil (4') als Innenmehrrund, vorzugsweise Innensechsrund, und das komplementäre Außenprofil (4) als Außenmehrrund, vorzugsweise Außensechsrund, ausgebildet sind.

7. Zahnimplantatsystem nach einem der Ansprüche 2 bis 6, **dadurch gekennzeichnet, dass** die Emergenzprofilausnehmung (7) ein Emergenzprofil-Innenprofil (9') und einen darüber angeordneten, Emergenzprofil-Aufnahmeabschnitt (10') umfasst,
wobei der Aufbauteil-Verbindungsabschnitt (8) ein zum Emergenzprofil-Innenprofil (9') kongruentes Aufbauteil-Außenprofil (9) und einen zum Emergenzprofil-Aufnahmeabschnitt (10') kongruenten Aufbauteil-Führungsabschnitt (10) aufweist.

8. Zahnimplantatsystem nach Anspruch 7, **dadurch gekennzeichnet, dass** das Emergenzprofil -Innenprofil (9') als Innenmehrrund, vorzugsweise Innensechsrund, oder kreisförmiges Rundprofil und das Aufbauteil-Außenprofil (9) als Außenmehrrund, vorzugsweise Außensechsrund, oder kreisförmiges Rundprofil ausgebildet sind.

9. Zahnimplantatsystem nach einem der Ansprüche 7 oder 8, **dadurch gekennzeichnet, dass** die Innenkontur des Emergenzprofil-Aufnahmeabschnitts (10') und der kongruente Aufbauteil-Führungsabschnitt (10) eine konische Form, eine zylindrische Form oder eine Kombination hiervon aufweist.

10. Zahnimplantatsystem nach einem der Ansprüche 1 bis 9, **dadurch gekennzeichnet, dass** das Implantatteil (1) und/oder das Abutment (2) aus Zirkonoxid, vorzugsweise Yttrium stabilisiertem Zirkonoxid, eingefärbtem Zirkonoxid oder Titan gefertigt sind.
